# EUROPÄISCHE PATENTSCHRIFT

(11) **EP 3 980 733 B1**
(45) Veröffentlichungstag und Bekanntmachung des Hinweises auf die Patenterteilung: **19.07.2023**
(21) Anmeldenummer: 20732510.1
(22) Anmeldetag: 03.06.2020
(51) Int. Cl.: G01G 11/00, G01G 11/08

(54) **VORRICHTUNG ZUM GRAVIMETRISCHEN DOSIEREN VON SCHÜTTGÜTERN**
APPARATUS FOR GRAVIMETRIC METERING OF BULK MATERIALS
DISPOSITIF DE DOSAGE GRAVIMÉTRIQUE DE PRODUITS EN VRAC

(30) Priorität: 04.06.2019 DE 102019114927
(43) Veröffentlichungstag der Anmeldung: 13.04.2022
(73) Patentinhaber: Kubota Brabender Technologie GmbH, 47055 Duisburg (DE)
(72) Erfinder: FELDGES, Robert, 47906 Kempen (DE); KNEZ, Jürgen, 47178 Duisburg (DE)
(74) Vertreter: Schoenen, Norbert
(86) Internationale Anmeldenummer: PCT/EP2020/065328
(87) Internationale Veröffentlichungsnummer: WO 2020/245183

(56) Entgegenhaltungen:
- EP-A1- 0 937 969
- DE-A1- 4 447 051
- DE-A1-102005 055 754
- DE-B4-102007 055 566

## Beschreibung

Die Erfindung betrifft eine Vorrichtung zum gravimetrischen Dosieren von Schüttgütern, mit mindestens einer Dosierschnecke (1.2) mit einem Antrieb und einem oberhalb der Dosierschnecke (1.2) angeordneten Rührwerk (1.3) mit einem separaten Antrieb (2.5),
wobei die Vorrichtung aus einem produktverarbeitenden Geräteteil (1) und einem Wäge- und Antriebsteil (2) besteht,
wobei beide Teile voneinander trennbar sind,
wobei der Wäge- und Antriebsteil (2) eine Antriebstechnik (2.5, 2.5.1) und eine Wägetechnik umfasst, welche eine Wägezelle (2.4) und ein ortsfestes Gehäuse oder Rahmenteil oder einen ortsfesten Unterbau umfasst,
wobei sich die Antriebstechnik (2.5, 2.5.1) und der produktverarbeitende Geräteteil (1) auf der Wägezelle (2.4) gegenüber dem ortsfesten Gehäuse oder Rahmenteil oder dem ortsfesten Unterbau abstützen.

Eine derartige Vorrichtung ist aus den Dokumente EP0937969 A1 und r DE 199 47 516 A1 bekannt.

Die erfindungsgemäße Vorrichtung umfasst insbesondere auch eine Regel- und Leistungselektronik.

### Stand der Technik

Das Dosieren von kleinen Massenströmen in einem Bereich von 50 g/h und geringer kann für eine große Diversität an Schüttgüter vom Stand der Technik bisher nicht geleistet werden. Es lassen sich nicht ohne weiteres bisher bekannte Geräte verwenden, da diese daran scheitern, schwierig zu fördernde Schüttgüter kontinuierlich zu dosieren, den geringen Massenstrom nicht messen können oder soweit miniaturisiert wurden, dass die Geräte nur für den Laborbetrieb eingesetzt werden können, nicht aber den 24/7-Industriebedingungen standhalten.

Eine Dosierwaage für Schüttgut ist aus der DE 10 2007 055 566 B4 (Schenck PROCESS GmbH) bekannt. Die gravimetrische Dosiervorrichtung für Schüttgüter enthält eine Dosierschnecke und ein Rührwerk, die separat mit Getriebemotoren angetrieben werden. Der Einsatz von Schrittmotoren ist daraus nicht bekannt. Von diesem Stand der Technik, der als nächstliegend angesehen wird, geht der

Patentanspruch 1 aus und ist dagegen abgegrenzt.

Eine weitere gravimetrische Dosiervorrichtung für Schüttgüter ist aus der EP0937969 A1 bekannt. Hier umfasst die Dosiervorrichtung mindestens einem Vorratsbehälter mit Auslaßöffnung für rieselfähiges Schüttgut und einen unterhalb des mindestens einen Vorratsbehälters angeordneten und das austretende Schüttgut aufnehmenden Wiegegefäß mit Wiegezelle zum Abwiegen des Schüttgutes.

| Eine weitere gravimetrische Dosiervorrichtung für Schüttgüter geht aus der DE 44 47 051 C2 (Rovema - Verpackungsmaschinen GmbH) hervor. Hier sind eine vertikale Schnecke sowie ein Rührer und ein Motor mit Getriebe für die Schnecke vorgesehen. Auch hier ist der Motor für die Schnecke nicht als Schrittmotor ausgebildet.

Die gravimetrische Dosiervorrichtung für Schüttgüter nach der DE 37 22 978 C2 (Librawerk Pelz & Nagel GmbH & Co. KG) zeigt eine Dosierschnecke, einen separaten Waagebehälter und einen Waagevorbehälter sowie einen Antrieb für die Dosierschnecke, wobei der Motor für den Antrieb nicht als Schrittmotor ausgebildet ist.

Eine ähnliche gravimetrische Dosiervorrichtung für Schüttgüter wie diejenige aus der DE 44 47 051 C2 ist aus der DE 36 40 520 C2 (ebenfalls Rovema - Verpackungsmaschinen GmbH) bekannt. Auch andere gravimetrische Dosiervorrichtungen nach dem Stand der Technik, z. B. aus der EP 3 278 068 B1 (Rockwool International A/S), EP 2 375 226 B1 (Di Matteo Förderanlagen GmbH & Co. KG), welche sich mit der Dosierung von faserigen, kompressiblen und adhäsiven Schüttgütern beschäftigt, sowie die Vorrichtung nach der DE 10 2006 015 804 B3 (Woywod Kunststoffmaschinen GmbH & Co. Vertriebs KG) zeigen nicht die Verwendung von Schrittmotoren für den Antrieb von Rührwerk und Dosierschnecke und geben auch keinen Hinweis darauf.

Die im Folgenden verwendete Abkürzung OEB steht für "Occupational Exposure Band" und gibt Auskunft darüber, welches Gefährdungspotential von einem Stoff ausgeht. Der OEB-Wert beschreibt dabei die Toxikologie des reinen Stoffes. Zur Veranschaulichung sei hier als Beispiel der aktuelle Standard vieler Applikationen genannt: OEB 5 entspricht einer Belastung von weniger als 1 µg/m3.

Für das Dosieren von sehr kleinen Massenströmen sind sehr genaue und damit empfindliche Wägezellen erforderlich. Beim Trennen und erneuten Zusammenfügen der getrennten Teile der Dosiervorrichtung ist es - anders als bei robusteren Wägezellen - unbedingt notwendig, eine Beschädigung der Wägezelle durch die beim Demontieren und Montieren wirkenden Kräfte zu verhindern.

Aus der DE 199 47 516 A1 ist eine Dosiervorrichtung für Schüttgüter bekannt, die u.a. aus einem Dosierbehälter und einem Auffangbehälter besteht, welche jeweils ein eigenes Rührwerksteil enthalten und voneinander trennbar sind. Die Vorrichtung enthält jedoch keine Wägezelle.

In der EP 0 486 424 A1 wird eine dosierte Vorrichtung zum Abgeben eines Schüttguts beschrieben, bei der ein Schüttgutbehälter mit einem Schneckengehäuse auf einer Waageplatte angebracht ist. Der Schüttgutbehälter kann mit dem Schneckengehäuse dabei als Einheit mittels Gleitschuhen von der Waageplatte getrennt werden. Eine Wägezellensicherung ist nicht vorhanden.

Die DE 10 2011 110 960 A1 beschreibt eine selbstkalibrierende Dosiervorrichtung, die jeweils Wägezellen am Schüttgutbehälter und im Austrittsbereich aufweist. Die Wägezellen können nicht gesichert werden.

### Aufgabe und Lösung der Erfindung

Die Aufgabe der Erfindung war daher, ein Gerät zu entwickeln, welches
- geringe Schüttgüter-Massenströme in einem Bereich von 50 g/h und geringer im gravimetrischen Betrieb regeln kann,
- gleichzeitig eine schnelle und sichere Trennbarkeit des produktverarbeitenden Geräteteils vom Wäge- und Antriebsteil (2) ohne eine Beschädigung der Wägezelle, insbesondere durch mechanischen Schlag oder Stoß, zu ermöglichen,
- der Diversität der Schüttgüter in möglichst vielen Industrien gerecht wird
- industrietauglich ist.

Zusätzliche Forderungen:
- Easy Clean, Zerlegbarkeit, Wechselbarkeit
- OEB, staubdicht
- Hygienic Design, Reinigbarkeit der Einzelteile, Dichtungswechselindikator
- geringe Pulsation des Massenstroms

Die genannten Aufgaben und zusätzlichen Forderungen werden bei einer Vorrichtung zum gravimetrischen Dosieren von Schüttgütern der eingangs genannten Art erfindungsgemäß dadurch gelöst, dass eine Verriegelungseinrichtung (2.3) für die Wägezelle (2.4) vorgesehen ist, wobei im offenen Verriegelungszustand der Verriegelungseinrichtung (2.3) sich die Antriebstechnik (2.5, 2.5.1) auf der Wägezelle (2.4) abstützt und im geschlossenen Verriegelungszustand der Verriegelungseinrichtung (2.3) sich die Antriebstechnik (2.5, 2.5.1) auf dem ortsfesten Gehäuse oder Rahmenteil oder dem ortsfesten Unterbau abstützt und insbesondere statisch mit dem ortsfesten Gehäuse oder Rahmenteil oder dem ortsfesten Unterbau verbunden ist.

Weitere vorteilhafte Ausgestaltungen umfassen die hohe Dichtigkeit des produktverarbeitenden Geräteteils (1) durch den Einsatz von Frästeilen, gute Reinigungsmöglichkeit und werkzeuglose Zerlegbarkeit des produktverarbeitenden Geräteteils (1), eine werkzeuglose Wägezellensicherung (2.3) für die schnelle Demontage des Prozessteils (1), ein ausziehbares Rührwerk (1.3), welches dadurch eng in den Trog (1.1) eingepasst ist und einen Dichtungswechselindikator.

### Vorteile der Erfindung

Unter anderem werden die folgenden Vorteile erreicht:
Durch ein geringes Taragewicht und einer speziellen, industrietauglichen Wägezelle (2.4) konnten die Voraussetzungen für die Lösung der erfindungsgemäßen Aufgabe geschaffen werden. Das geringe Taragewicht kann insbesondere erreicht werden durch
- die verwendeten Motoren
- das Verwenden zweier leichter Motoren anstelle eines Motors mit einem Getriebe, zum Antreiben für Rührwerk und Schnecken
- leichte Schnellverbindungen, insbesondere Schellen (1.4.2) und Kupplungen (2.5.1) (1.2.3) (1.3.3).

Erfindungsgemäß ist auf das Getriebe zwischen Rührwerk und Schnecken zu verzichten. Getriebe sind dennoch vorhanden. Die Motoren sind Getriebemotoren und weiterhin muss im Antriebsstrang der Schnecke, wenn mehrere Schnecken eingesetzt werden, von einer Antriebswelle mit einem Getriebe auf die Anzahl der Schnecken übersetzt werden.

Um der Anforderung gerecht zu werden, möglichst unterschiedliche Schüttgüter dosieren zu können, wird das erfindungsgemäße Gerät angetrieben durch Elektromotoren. Gemäß Anspruch 4 werden Schnecke(n) und Rührwerk mit jeweils separatem Antrieb versehen. Daher weist das erfindungsgemäße Gerät mind. zwei Elektromotoren auf.

Die Elektromotoren wiederum können jeweils ein Getriebe haben (auch unter der Bezeichnung "Getriebemotoren" bekannt).

Die Anforderungen an den Antrieb im erfindungsgemäßen Gerät sind:
a) Geringes Gewicht (< 1 kg) und Bauraum < 150 x 70 x 105 (L × B × H mm)
b) Sehr schnelle Ansprache bei Sollwertänderung
c) Hohe Drehzahlkonstanz bei schwankendem Abtriebsmoment
d) Großer Verstellbereich, ohne ein Schaltgetriebe zu benötigen
e) Drehmoment verfügbar ab Drehzahl "0"
f) Stellbereich 1: 100 oder besser

- Nach heutigem Stand der Technik scheiden aufgrund dieser Anforderungen Asynchronantriebe aus.
- Den Antrieb, den der Anmelder derzeit verwendet, ist ein Schrittmotor oder ein Servomotor.

Aufgrund der zwei separaten Motoren kann die Drehzahl des Rührwerks (1.3) frei von der Drehzahl der Dosierschnecken (1.2) gewählt werden. Weiterhin ist das Schneckenrohr (1.5) so kurz wie möglich ausgelegt, damit die Reibung und der Druck, die das Schüttgut im Schneckenrohr (1.5) erfährt, gering gehalten wird. Dadurch wird das Bilden von Agglomeraten bei kohäsiven Schüttgütern gering gehalten. Vorteilhaft sind außerdem mehrgängige Schnecken, wie sie aus der deutschen Patentanmeldung 10 2018 128 043.2 bekannt sind, auf die zur Ergänzung der Offenbarung ausdrücklich Bezug genommen wird. Durch die, im Vergleich zum Stand der Technik, geringere Agglomeratbildung können mit dem erfindungsgemäßen Gerät nicht nur Schüttgüter dosiert werden, welche mit anderen Dosiergeräten nicht dosiert werden können, sondern auch weiterhin Schüttgüter pulsationsärmer als im Stand der Technik dosiert werden.

Weiterhin ist die gesamte Konstruktion industrietauglich durch folgende vorteilhafte Ausgestaltungen:
- Einfache und schnelle werkzeuglose Wägezellensicherung (2.3)
- Schnelle Rüstzeit für das Abbauen / werkzeugloses Wechseln des gesamten produktverarbeitenden Geräteteils (1) und auch einzelner Aggregate, wie z. B. Dosierschnecken (1.2), Rührwerk (1.3) und Schneckenrohre (1.5).
- Staubdichte und schnell zu lösende Schnellverbindungen (1.4), als Grundvoraussetzung, den Anforderungen nach OEB / Toxizität und Zonenverschleppung gerecht zu werden, ohne den Demontageprozess aufwändig zu gestalten.
- Großer Regelbereich des Schüttgüter-Massenstroms: In einem Bereich von 50 g/h und geringer bis mehrere kg/h kann das erfindungsgemäße Gerät dosieren ohne Umbauten. Die Anforderung ist sehr wichtig für die Skalierbarkeit der gesamten Produktionsstraße, bzw. der Übertragung vom Labor in einen 24/7-Betrieb.
- Mit dem erfindungsgemäßen Gerät können ggf. z. B. in der Pharma- oder Spezialchemie die Laborversuche und die Produktion auf den identischen Geräten abgebildet werden.

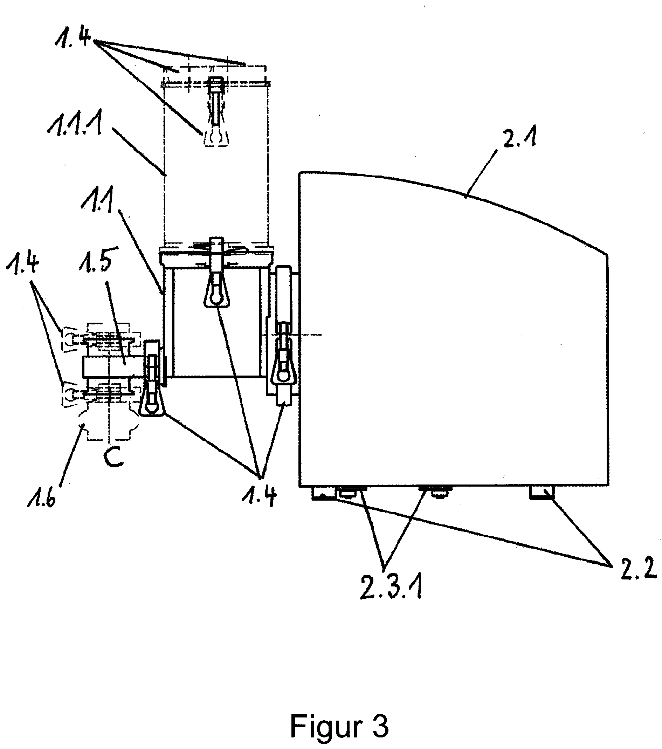

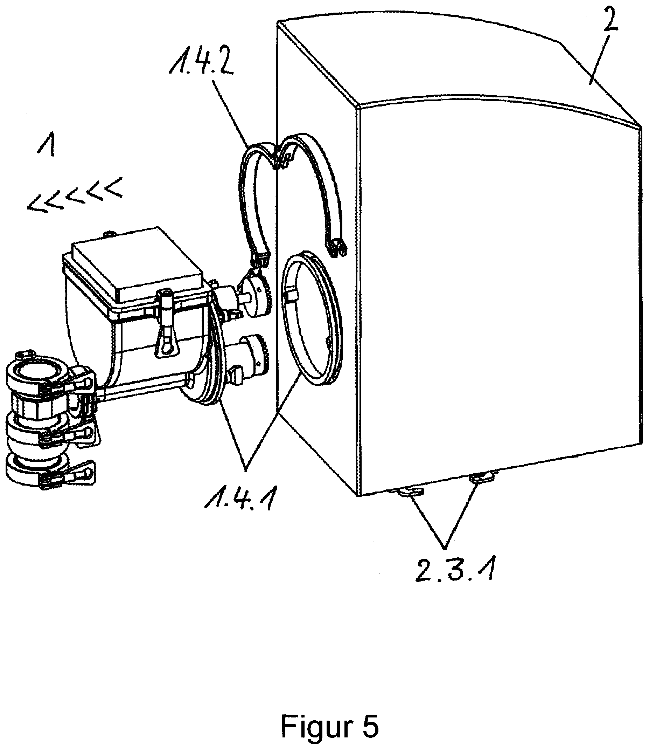

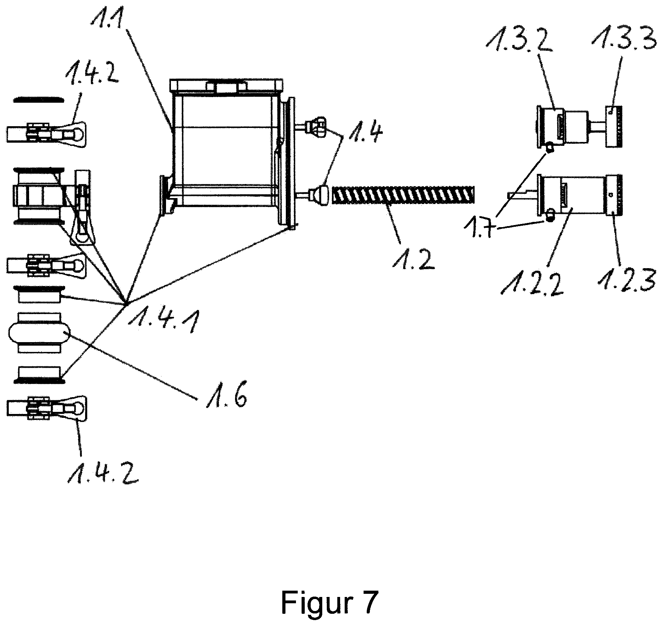

Die Anforderungen an den OEB-Standard werden erreicht durch alle in Figur 3 mit Schnellverbindung (1.4) gekennzeichneten Stellen. Im Detail:
- (1.4.1) Schnellverbindung Stutzen Figur 5 + 7
- Verbindung zwischen Vorlage (1.1.1) und Trog (1.1)
- Verbindung zwischen Trog (1.1) und Lagerung Antriebswelle Rührwerk (1.3.2)
- Verbindung zwischen Trog (1.1) und Doppelwellengetriebe (1.2.2)

Die Schnellverbindungen werden ausgeführt mit Formtoleranzen:
Ebenheit 0,2 mm
Parallelität <= 0,1 mm
Rechtwinkligkeit <=0,05 mm
sowie Oberfläche Ra <= 0,4 µm.

Neben den üblichen Merkmalen des Hygienic Design, wie Radien, Materialauswahl, Oberflächen- und Fertigungsqualität verfügt das erfindungsgemäße Gerät über eine sehr einfache und schnelle Zerlegbarkeit sowie einen Dichtungswechselindikator (1.7) für Wellendurchführungen. Der Dichtungswechselindikator (1.7) besteht zumindest teilweise aus einem transparenten Werkstoff. Dadurch kann direkt nach dem Abnehmen des produktverarbeitenden Geräteteils (1) eine Sichtprüfung erfolgen. Ist durch den transparenten Werkstoff eine Menge an Schüttgut zu sehen, so ist zwingend die jeweilige Dichtung zu tauschen. So ist es dem Betreiber des erfindungsgemäßen Geräts möglich, die Intensität der geplanten Reinigung ggf. situationsbedingt anzupassen.

Die vielseitige Einsetzbarkeit des erfindungsgemäßen Geräts ermöglicht der Industrie, den Bedürfnissen des Consumer- und des B2B-Markts nach individuellen, kundenspezifischen Produkten zu vertretbaren Kosten gerecht zu werden und entsprechende Produkte zu realisieren. Durch den Einsatz des erfindungsgemäßen Geräts in vielen Produktionsschritten mit unterschiedlichen Schüttgüter-Eigenschaften und Massenströmen reduzieren sich beispielsweise die Kosten für die Instandhaltung durch die Bereithaltung weniger Ersatzteile, die auf alle Geräte passen, und für die Schulung der Operator auf ein Gerät, welches ggf. in allen Produktionslinien bis auf einzelne Aggregate und Parameter identisch ist.

Dabei ist besonders vorteilhaft: Die Drehzahl des Rührwerks kann frei von der Drehzahl der Dosierschnecken eingestellt werden. Trotz des hohen technischen Aufwands, der zur Realisierung dieser Anforderung notwendig ist, können geringe Massenströme in einem Bereich von 50 g/h und geringer in einer industrietauglichen Konstruktion gravimetrisch geregelt werden.

Die Erfinder haben bei der Entwicklung der erfindungsgemäßen Anlage die folgenden technische Schwierigkeit in nicht naheliegender Weise überwunden, nämlich die Vereinbarung aller Anforderungen in einer einzigen Konstruktion, obwohl die vorhandenen und bekannten Lösungswege gegensätzlich sind. Mit anderen Worten: Wird nach dem Stand der Technik die Anforderung "X" erfüllt, ist die Erfüllung von Anforderung "Y" nicht mehr möglich.

### Beispiel 1: Geringe Massenströme

Im Stand der Technik sind diverse Geräte bekannt, die der Anforderung geringer Massenströme in einem Bereich von 50 g/h und geringer gerecht werden. Genannt seien hier Geräte der Firmen ThreeTec, 5703 Seon, Schweiz: "ZD12FB", Coperion KTron, 70469 Stuttgart, Deutschland: "M12" und Gericke, 8105 CH-Regensdorf, Schweiz: "DIW-PE GZD 100FB". Aufgrund der kleineren Abmessungen der Schnecken / Schneckenrohre/ Schneckenkammern und der Aktivierung der Schüttgüter durch ein Bodenrührwerk können diese Geräte freifließende und feinkörnige Schüttgüter dosieren. Hochkohäsive Schüttgüter, die Schüttgüter-Brücken oder Schüttgüter-Löcher ausbilden, können aber nur bedingt oder gar nicht dosiert werden. Diese Schüttgüter strömen nicht in die kleinen Schneckenkammern, und die Schüttgüter-Brücken können durch das Bodenrührwerk nicht aktiviert werden.

### Beispiel 2: Diversität der Schüttgüter

Das Gerät KTron Coperion: "QT20" entspricht der Anforderung, die Schüttgüter zu dosieren, die in der kleineren M12 nicht ausgetragen werden können, allerdings nicht im Umfang des erfindungsgemäßen Geräts aufgrund des festen Drehzahlverhältnisses zwischen Dosierschnecken und Rührwerk. Weiterhin kann das Gerät "QT20" nicht derart geringe Massenströme wie das erfindungsgemäße Gerät gravimetrisch dosieren. Die Gründe dafür liegen in der erfindungsgemäßen Kombination aus Taragewicht und der eingesetzten Wägetechnik.

### Beispiel 3: Industrietauglichkeit

Die Geräte Feedos und Coperion QT20 von Gericke sind vergleichbar industrietauglich wie das erfindungsgemäße Gerät, allerdings eingeschränkt bezogen auf den minimal möglichen gravimetrisch erfassbaren Massenstrom. Die unter "geringe Massenströme" genannten Geräte wiederum sind nicht industrietauglich.

In Stichworten die erfindungsgemäß erreichten gegensätzlichen Anforderungen:
- Hochpräzise Dreh- und Frästeile, staubdichte Anbindung und ein pulsationsarmer Schüttgüter-Massenstrom führen im Stand der Technik zu einem hohen Taragewicht, was wiederum nachteilig ist für die Anforderung, geringe Massenströme gravimetrisch zu regeln.
- Ein Leichtbau und damit eine Reduzierung des Taragewichts, damit geringe Massenströme gravimetrisch erfasst werden können, bedeutet im Stand der Technik meistens fehlende Industrietauglichkeit und staubdicht bedeutet empfindliches Laborequipment.
- Miniaturisierung zur Reduzierung des Taragewichts, damit geringe Massenströme gravimetrisch erfasst werden können, bedeutet im Stand der Technik, dass das Gerät nur für wenige Schüttgüter-Typen geeignet ist. Z. B. scheiden im Stand der Technik grobkörnige, kohäsive Schüttgüter aus. Durchsätze mit mehreren kg/h sind im Stand der Technik außerdem nicht möglich.

Vorteilhafte Ausgestaltungen der Erfindung sind in den Unteransprüchen angeführt.

So wird vorgeschlagen,
- dass die Verriegelungseinrichtung (2.3) einen Hebel (2.3.1) mit einem Drehgelenk (14) am ortsfesten Gehäuse oder Rahmenteil oder dem ortsfesten Unterbau aufweist und in den offenen oder geschlossenen Verriegelungszustand verschwenkbar ist,
- dass der Hebel (2.3.1) eine Lasche (12) aufweist, die zum Verriegeln in eine korrespondierende Vertiefung (21) an der Antriebstechnik (2.5, 2.5.1) eingreift,
- dass die Verriegelungseinrichtung (2.3) an der Antriebstechnik (2.5, 2.5.1) angebracht ist, die mittels der Verriegelungseinrichtung (2.3) mit dem ortsfesten Gehäuse oder Rahmenteil oder dem ortsfesten Unterbau verriegelbar ist,
- dass die korrespondierende Vertiefung (21) als eine Nut in einer Halteleiste (13) der Antriebstechnik (2.5, 2.5.1) ausgebildet ist,
- dass der Hebel (2.3.1) werkzeuglos manuell oder motorisch, insbesondere elektrisch, betätigbar ist,
- dass eine Überwachung des Verriegelungszustands über eine Farbgebung des Hebels (2.3.1) und/oder Positionsschalter vorgesehen ist,
- dass ein Schüttgut-Massenstrom in einem Bereich von 50 g/h und geringer bis über mehrere kg/h dosierbar ist,
- dass die Drehzahl des Rührwerks unabhängig von der Drehzahl der, mindestens einen, ggf. mehrgängigen Dosierschnecke (1.2) einstellbar ist,
- dass die Antriebe von Dosierschnecke (1.2) und Rührwerk (1.3) jeweils einen Schrittmotor oder Servomotor (2.5) umfassen,
- dass staubdichte Schnellverbindungen eingesetzt werden,
- dass mehrere, ineinander eingreifende, horizontal nebeneinander angeordnete ein- oder mehrgängige Dosierschnecken (1.2) zur pulsationsarmen Dosierung vorgesehen sind,
- dass sie ein Hygienic Design aufweist,
- dass sie werkzeuglos zerlegbar ist.

### Ausführungsbeispiele

Im Folgenden werden zwei Ausführungsbeispiele der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1:: Gesamtaufbau gemäß Erfindung, Ansicht seitlich, optionale Teile gestrichelt, Hauptaufteilung in produktverarbeitendes Geräteteil (1) und Wäge- und Antriebstechnik (2),

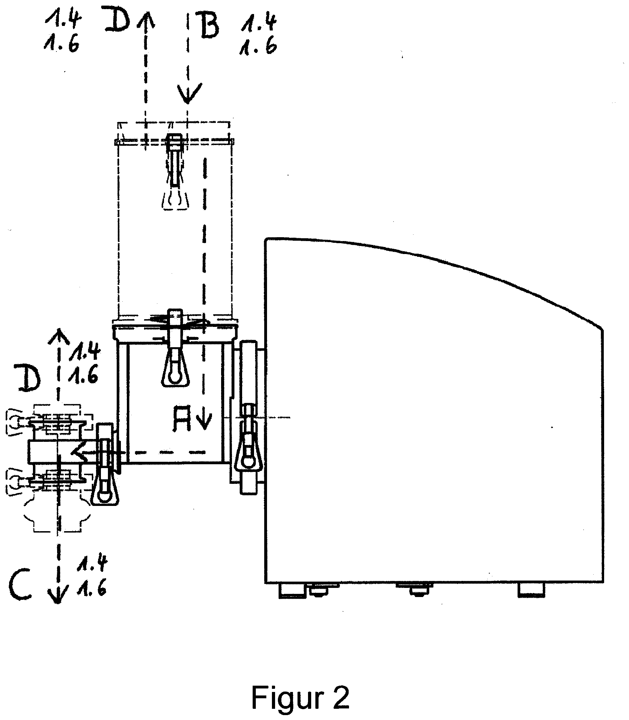

- Figur 2:: Gesamtaufbau gemäß Erfindung, Ansicht seitlich, optionale Teile gestrichelt, Medienrichtungen, Prozessrichtung (A), Einlauf (B) optional, Entlüftung(en) (D) optional, Auslauf (C) Position kann variieren,
- Figur 3:: Gesamtaufbau gemäß Erfindung, Ansicht seitlich, optionale Teile gestrichelt, Einzelteile,
- Figur 4:: produktverarbeitendes Geräteteil gemäß Erfindung, Ansicht seitlich, ohne Vorlage (1.1.1) und ohne Anbindungen am Schneckenrohr (1.5),
- Figur 5:: Demontage des produktverarbeitenden Geräteteils (1) von der feststehenden Wäge- und Antriebstechnik (2),
- Figur 6:: Zerlegung des produktverarbeitenden Geräteteils (1) Teilschritt,
- Figur 7:: Zerlegung des produktverarbeitenden Geräteteils (1) Endergebnis,
- Figur 8:: Wäge- und Antriebstechnik (2) gemäß Erfindung, Ansicht seitlich, ohne Maschinenhaube (2.1),
- Figur 9:: den Gesamtaufbau der erfindungsgemäßen Vorrichtung mit einer manuell betätigbaren Wägezellensicherung in perspektivischer Darstellung,
- Figur 10:: eine Draufsicht auf die erfindungsgemäße Vorrichtung nach Figur 9 bei entferntem Gehäuse und entfernter Antriebstechnik im offenen Verriegelungszustand,
- Figur 11:: eine vergrößerte perspektivischer Darstellung eines Teils der Verriegelungseinrichtung bei der erfindungsgemäßen Vorrichtung nach Figur 10,
- Figur 12:: eine Draufsicht auf die erfindungsgemäße Vorrichtung nach Figur 9 bei entferntem Gehäuse und entfernter Antriebstechnik im geschlossenen Verriegelungszustand,
- Figur 13:: eine vergrößerte perspektivischer Darstellung eines Teils der Verriegelungseinrichtung bei der erfindungsgemäßen Vorrichtung nach Figur 12,
- Figur 14:: eine Draufsicht auf die erfindungsgemäße Vorrichtung bei entferntem Gehäuse und entfernter Antriebstechnik mit einer elektrisch betätigbaren Wägezellensicherung, im offenen Verriegelungszustand,
- Figur 15:: eine perspektivischer Darstellung der erfindungsgemäßen Vorrichtung nach Figur 14 mit der elektrisch betätigbaren Verriegelungseinrichtung,
- Figur 16:: eine Draufsicht auf die erfindungsgemäße Vorrichtung bei entferntem Gehäuse und entfernter Antriebstechnik mit einer elektrisch betätigbaren Wägezellensicherung, im geschlossenen Verriegelungszustand,
- Figur 17:: eine perspektivischer Darstellung der erfindungsgemäßen Vorrichtung nach Figur 16 mit der elektrisch betätigbaren Verriegelungseinrichtung.

### Aufbau der erfindungsgemäßen Vorrichtung

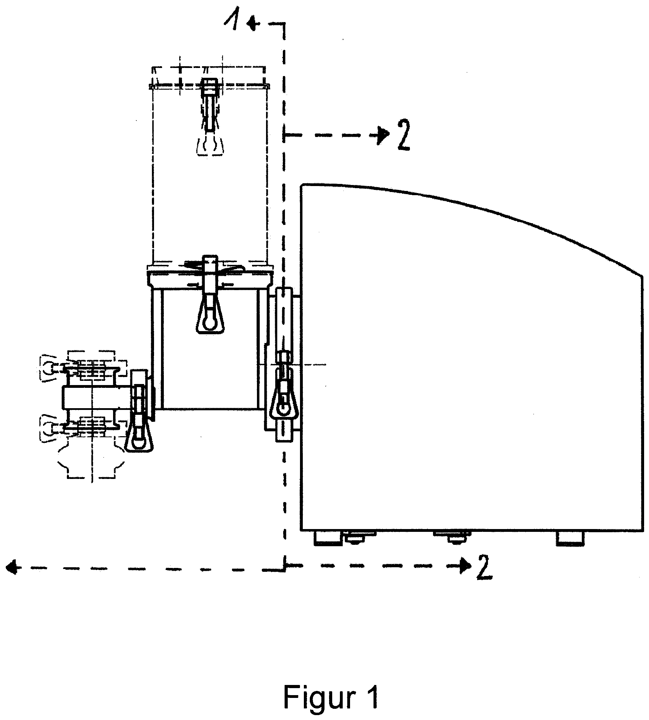

Die Figuren 1 und 3 zeigen einen erfindungsgemäßen Gesamtaufbau, bestehend aus dem produktverarbeitenden Geräteteil (1) und der Wäge- und Antriebstechnik (2). Die beiden genannten Teile (1) und (2) werden über eine schnell lösbare Verbindung, im Folgenden Schnellverbindung (1.4), verbunden.

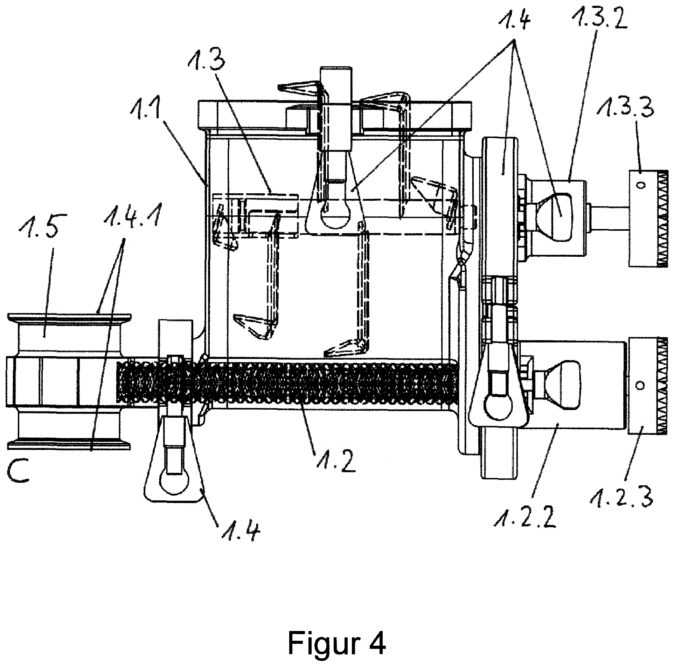

Figur 4 zeigt das produktverarbeitende Geräteteil (1), gelöst von der Wäge- und Antriebstechnik (2). Nach oben kann sich eine optionale Vorlage (1.1.1) oder ein Trogdeckel anschließen. Im Trog (1) befindet sich ein Rührwerk (1.3) und darunter die Dosierschnecke(n) (1.2). Die Dosierschnecken (1.2) ragen in das Schneckenrohr (1.5) und enden dort an einer Stirnfläche.

Figur 5 zeigt das Demontieren des produktverarbeitenden Geräteteils (1) von der feststehenden Wäge- und Antriebstechnik (2). Zwei Schnellverbindungs-Stutzen (1.4.1) wurden durch eine Schnellverbindungs-Schelle (1.4.2) gesichert.

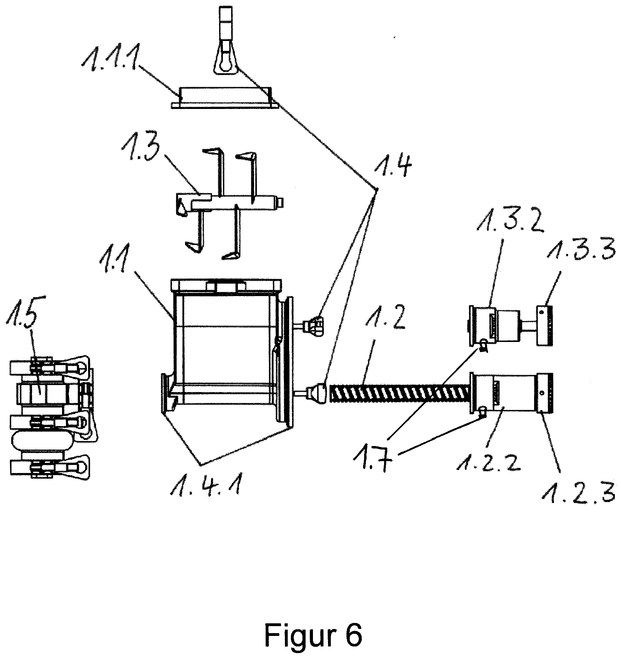

Figur 6 zeigt die Zerlegung des produktverarbeitenden Geräteteils (1) in seine Bestandteile (Teilschritt).

Figur 7 zeigt die Zerlegung des produktverarbeitenden Geräteteils (1) in Einzelteile (Endergebnis des Zerlegens für die Reinigung).

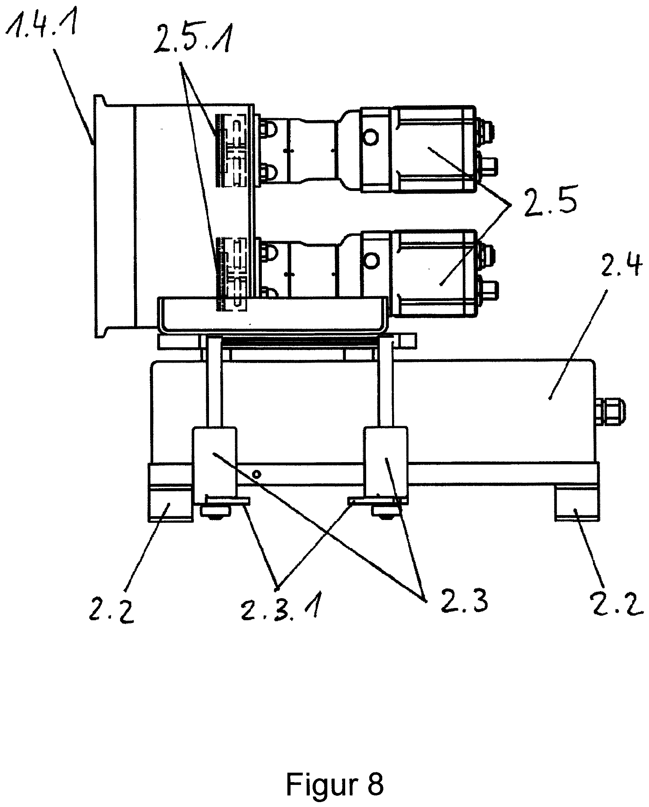

Figur 8: Die Wäge- und Antriebstechnik (2) steht auf 4 Dämpfern (2.2), auf denen die Wägezelle (2.4) montiert ist.

### Arbeitsweise der erfindungsgemäßen Vorrichtung

Im Folgenden wird die Arbeitsweise der erfindungsgemäßen Vorrichtung im Detail erläutert:
Der Verwendungszweck der erfindungsgemäßen Vorrichtung ist die Steuerung eines Massenstroms eines Schüttguts. Als Steuerungsbeispiele seien genannt: Einen Massenstrom exakt und kontinuierlich einzuhalten oder diskontinuierlich in einem Zeitfenster einen Massenstrom zu ermöglichen, der nach Erreichen einer vorgegebenen Menge stoppt. Das erfindungsgemäße Gerät wird in allen Schüttgüter verarbeitenden Industrien benötigt. Folgende Industrien seien als Beispiel genannt.
- Herstellung von Grundchemikalien
- für die Weiterverarbeitung von Kunststoffen, Elastomeren und Gummi
- für das Mischen von Baustoffen
- sowie für die Herstellung verzehrfertiger Tiernahrung, Lebensmittel und Pharmazeutika.

Schritt 1: Aufgrund der vielfältigen Industrien und der großen Diversität der eingesetzten Schüttgüter wird das erfindungsgemäße Gerät vor dem Einsatz gerüstet. Schritt 1 ist das Rüsten des erfindungsgemäßen Geräts auf die Anwendungsbedingungen.

Von dem Rüstvorgang können Aggregate, z. B. die Schnecke (1.2), betroffen sein und auch Parameter, z. B. die Drehzahl des Rührwerks (1.3). Die gesamte Installation und Parametrierung ist Teil der Rezeptur.

Die geeigneten Installations-Parameter müssen indes zuvor bestimmt worden sein.

Schritt 2: In der Regel wird eine statische (Produktionslinie) oder quasistatische Installation (Labor, Technikum) verwendet. Die Wäge- und Antriebstechnik (2) befindet sich bereits ausgerichtet in Position. Die Schnellverbindung (1.4.1) des komplett gerüsteten produktverarbeitenden Geräteteils (1) wird leer oder mit Schüttgütern gefüllt in die Schnellverbindung (1.4.1) der Wäge- und Antriebstechnik (2) gesteckt. Die Schnellverbindung (1.4) ist so ausgeführt, dass das produktverarbeitende Geräteteil (2) sicher in dieser Position verbleibt und keiner weiteren Sicherung während der Montage bedarf. Diese Eigenschaft ermöglicht eine einfache Bedienung beispielsweise durch nur eine(n) Bediener(in).

Beim Einstecken des produktverarbeitenden Geräteteils (2) erfolgt auch der Kupplungsvorgang der Antriebsstränge. Die Kupplung der Dosierschnecken an der Abtriebsseite (1.2.3) und die Kupplung des Rührwerks an der Abtriebsseite (1.3.3) treffen auf die Kontur der Kupplungen der Antriebseite (2.5.1) und richten sich selbsttätig aneinander aus.

Schritt 3: Das produktverarbeitende Geräteteil (2) wird mit einer Schnellverbindungs-Schelle (1.4) in der Position gesichert.

Schritt 4: Die den Materialfluss bedingten Anbindungen (B, C, D) werden geschlossen. Bei einem offenem Materialfluss, bzw. Prozess kann dieser Vorgang entfallen. Bei einem geschlossenen Materialfluss bzw. Prozess mit Nachfüllvorgang können beispielweise folgende Anbindungen vorhanden sein: Einlauf/Einläufe (B), Auslauf (C), Entlüftung/en (D)

Schritt 5: Sollte das produktverarbeitende Geräteteil wie unter Schritt 1 beschrieben mit Schüttgut gefüllt sein, können nun evtl. vorhandene Absperrorgane geöffnet werden.

Schritt 6: Der letzte mechanische Arbeitsschritt an dem Gerät ist das Lösen der werkzeuglose Wägezellensicherung (2.3), welches durch zwei Hebel (2.3.1) erfolgt. Das Gerät ist nun betriebsbereit.

Schritt 7: Die Parameter werden eingestellt. Neben der manuellen Eingabe der Parameter ist auch eine digitale, übergeordnete Rezeptur möglich, die die Parametrierung vornimmt. Das Gerät ist nun an den übergeordneten Prozess / die Rezeptur entsprechend eingestellt.

Schritt 8: Das Gerät bekommt den Startbefehl, welcher manuell oder übergeordnet durch die Steuerung der Produktionslinie erfolgen kann.

Schritt 9, der gravimetrische Betrieb: Eine herausragende Eigenschaft des erfindungsgemäßen Geräts ist der gravimetrische Betrieb in einem Bereich von 50 g/h und geringer. In diesem Massenstrombereich sorgt ein Regelkreis automatisch für die Einhaltung des eingestellten Massenstroms (Schritt 7/ Parameter). Im Wesentlichen wird durch zwei aufeinander ermittelte Massen, die die Wägezelle (2.4) misst, der tatsächliche Massenstrom errechnet und über das Stellglied der Motor (2.5) geregelt. Eine weitere herausragende Eigenschaft ist, dass die Drehzahl des Rührwerks (1.3) unabhängig von der Drehzahl der Dosierschnecken (1.2) eingestellt werden kann.

Die wichtigste alternative Betriebsart ist ein volumetrischer Betrieb mit fest eingestellter Drehzahl.

Hinweis: Voraussetzung für den gravimetrischen Betrieb ist das Fehlen von Berührungen zwischen feststehenden zu- oder abführenden Anlagenteilen der übergeordneten Produktionsstraße oder flexible Anbindungen (1.6), die so ausgeführt sind, dass sie die Dynamik der Wägung des eigentlich zu messenden Schüttgüter-Massenstroms nicht weiter stören.

Der Materialfluss des Schüttguts im produktverarbeitenden Geräteteil ist wie folgt: Das Schüttgüter ist im Trog (1.1) und einem optionalen Vorlage-Behälter (1.1.1) bevorratet. Aufgrund der Schwerkraft fließt das Schüttgut in diesem Bereich an die tiefste Stelle des Trogs (1.1). An dieser tiefsten Stelle des Trogs (1.1) befinden sich die Dosierschnecken (1.2).

Kohäsive und grobkörnige Schüttgüter müssen durch das Rührwerk (1.3) aktiviert werden, damit das Fließen des Schüttguts in Richtung zu den Dosierschnecken (1.2) nicht unterbrochen wird, zum Beispiel weil das Schüttgut eine Schüttgut-Brücke ausgebildet hat und das Schüttgut oberhalb der Schüttgut-Brücke nicht mehr nachfließen kann.

Die Drehzahl des Rührwerks (1.3) muss produktspezifisch angepasst werden. Den größten Freiheitsgrad bietet hier ein von den Dosierschnecken (1.2) getrennter Antrieb (2.5). Zu wenig Aktivierung mit dem Rührwerk (1.3) würde einen pulsierenden oder aussetzenden Schüttgut-Massenstrom bewirken.

Zu viel Aktivierung mit dem Rührwerk (1.3) kann das Schüttgüter kompaktieren, bzw. allgemein das Schüttgüter nachteilig konditionieren, sodass z. B. Agglomerate oder kompaktierte Schüttgut-Bereiche entstehen. Beides sorgt für ein schlechteres Füllen der Dosierschnecken (1.2) und für einen pulsierenden Abwurf am Auslauf (C).

Eine Agglomeratbildung versucht man i.d.R. in allen Industriezweigen zu vermeiden, da ein homogenes, uniformes Produkt mit gleichbleibender und unidirektionalen Eigenschaften und Qualität hergestellt werden soll. Insbesondere die Spezial- und Pharma-Chemie-Industrie strebt nach agglomeratfreiem Dosieren, da der Trend zu immer schnelleren Reaktionszeiten geht. Dies wird u.a. erreicht durch Schüttgüter mit geringer spezifischer Partikeloberfläche, das heißt einer maximalen Schüttgut-Oberfläche und ganz kleinen Schüttgut-Partikeln. Für einige Schüttgüter gilt, je kleiner die Partikelgröße, desto schwieriger handhabbar sind die Fließeigenschaften des Schüttgutes.

Die Dosierschnecken (1.2) fördern das Schüttgut vom Trog (1.1) durch das Schneckenrohr (1.5) zum Auslauf (C). Der Auslauf (C) ist die Anbindung an den nachgeschalteten Prozess und kann daher vielseitig realisiert werden. Alle Varianten setzen auf eine vertikale Stirnfläche. Ab dieser Stirnfläche fällt das geförderte Schüttgut aufgrund der Schwerkraft nach unten. Die Anbindung an den Auslauf (C) kann direkt im Bereich der Stirnfläche, also vertikal erfolgen, sodass sich das Schüttgut ab der Stirnfläche im nachgeschalteten Prozess befindet oder horizontal, dann ist das Schneckenrohr (1.5), wie in Figur 1 gezeigt, mit einem Fallrohr versehen oder der Auslauf (C) ist komplett frei ohne umschließende Bauten (offener Prozess).

Schritt 10, die Befüllung: Mit dem erfindungsgemäßen Gerät sind mehrere Möglichkeiten der Nachfüllung möglich:
- Einlauf (geschlossener Materialfluss/ Prozess). Das erfindungsgemäße Gerät in der Betriebsart gravimetrisch wechselt für die Dauer der Nachfüllung in die Betriebsart volumetrisch.
- Manuelle Befüllung (offener Materialfluss/Prozess). Das erfindungsgemäße Gerät in der Betriebsart gravimetrisch wechselt für die Dauer der Nachfüllung in Betriebsart volumetrisch.
- Wechsel des produktverarbeitenden Geräteteils (2): Dies ist eine herausragende Eigenschaft. Aufgrund nur einer Schnellverbindung zwischen dem produktverarbeitenden Geräteteil (1) und der Antriebs- und Wägetechnik (2) ist es möglich, mehrere produktverarbeitende Geräteteile (1) vorzuhalten und diese sehr schnell zu wechseln.

Schritt 11, optional / dargestellt in Figur 5: Demontage/Wechsel des produktverarbeitende Geräteteil (1): Die Antriebe (2.5) werden gestoppt. Die werkzeuglose Wägezellensicherung (2.3) wird mittels zwei Hebeln (2.3.1) betätigt. Die Wägezelle (2.4) ist nun vor Beschädigungen geschützt.

Geschlossener Prozess: Optionale Absperrvorrichtungen werden geschlossen. Optionale flexible Anbindungen (1.6) werden gelöst, beispielsweise mit Schnellverbindungen (1.4) und optional die Verbindungsstellen mit Blinddeckel wieder verschlossen.

Beim offenen Prozess sind diese Arbeitsschritte nicht notwendig. Dann wird die Schnellverbindung (1.4) zwischen produktverarbeitende Geräteteil (1) und Wäge- und Antriebstechnik (2) entfernt. Im Anschluss kann das produktverarbeitende Geräteteil (1) komplett entnommen werden und z. B. direkt das nächste, bereitliegende produktverarbeitende Geräteteil (1) eingesetzt werden.

Dieser Prozessschritt ist gerade für Industrien mit gefährlichen Schüttgütern und häufigen, schnellen Produktwechseln sehr wichtig.

Schritt 12, optional / dargestellt in Figur 6: Zerlegen des produktverarbeitende Geräteteil (1).

Die Schnellverbindung(en) (1.4) zwischen Trog (1.1) und optionaler Vorlage (1.1.1) oder Trogdeckel werden gelöst und der Trog (1.1) geöffnet. Das Rührwerk (1.3) wird gelöst und entnommen. Alle übrigen Schnellverschlüsse (1.4) werden gelöst.

Nun kann entnommen werden:
- Lagerung von Antriebswelle des Rührwerks (1.3.2)
- Doppelwellengetriebe (1.2.2) mit Dosierschnecken (1.3)
- Schneckenrohr (1.5) und optionale Anbindungen, Auslauf (C), Entlüftung (D)

Im nächsten optionalen Schritt / dargestellt in Figur 7 können die Dosierschnecken (1.3) vom Doppelwellengetriebe (1.2.2) gezogen werden. Dann kann das Rührwerk (1.3) ggf. je nach Ausführung weiter zerlegt werden.

Dieser Prozessschritt ist gerade für Industrien mit gefährlichen Schüttgütern und häufigen, schnellen Produktwechseln sehr wichtig.

### Die werkzeuglosen Wägezellensicherung

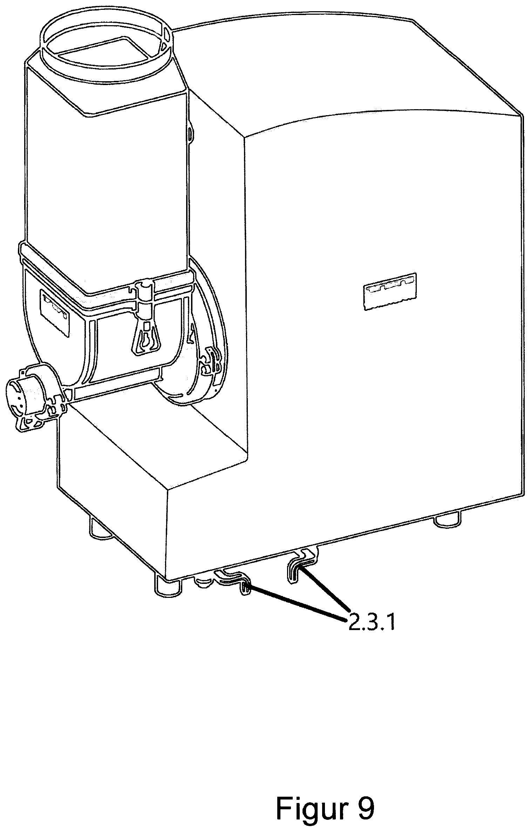

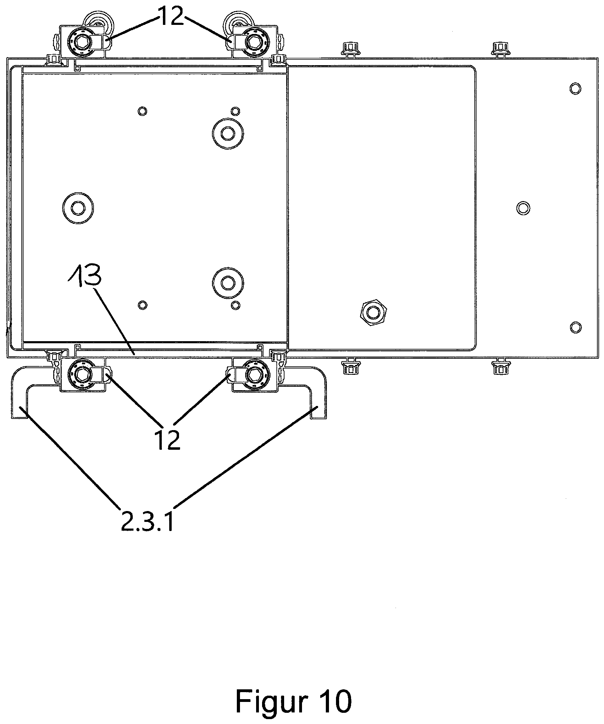

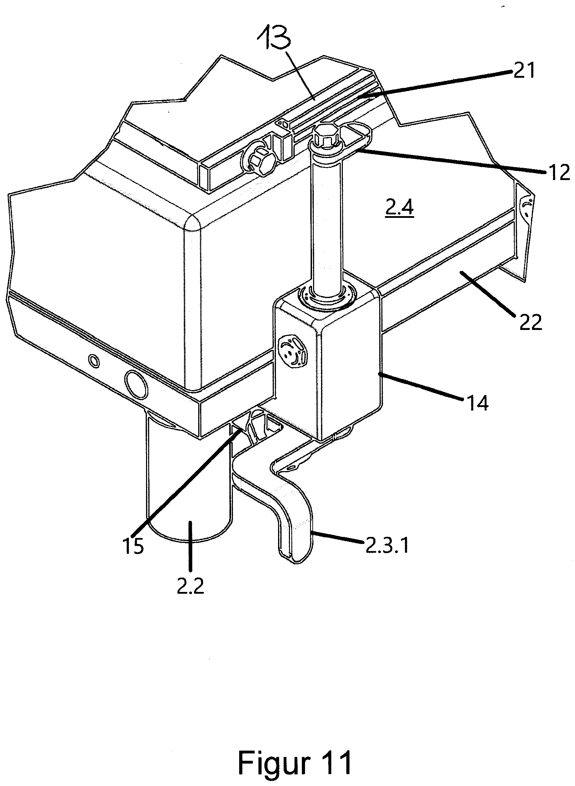

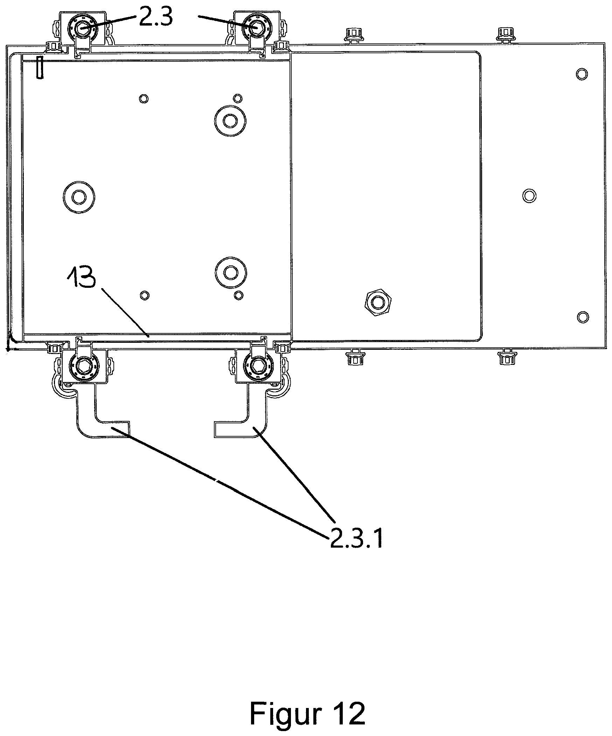

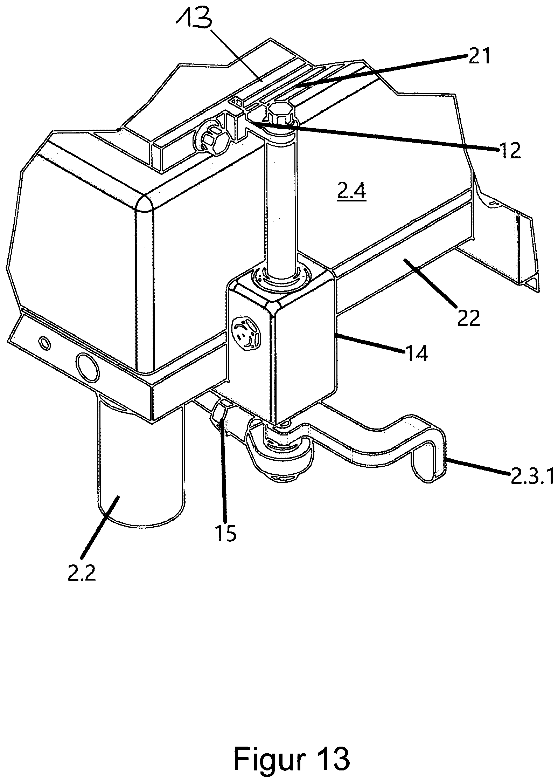

Die mechanische Ausführung der werkzeuglosen Wägezellensicherung ist in den Figuren 9 bis 13 dargestellt. Die Aufgabe der werkzeuglosen Wägezellensicherung ist es, die Wägezelle beim Handling vor Beschädigung zu schützen, insbesondere beim Abnehmen bzw. Wechsel des Verfahrensteils.

Der Hebelmechanismus ist so gestaltet, dass bei gesicherter Wägezelle rot lackierte Stellen der zwei Hebel (2.3.1) zu erkennen sind (Zustand = gesichert).

Bei einer Entriegelung sind diese lackierten Stellen nicht zu sehen, da sie sich dann unter der Abdeckhaube des Gerätes befinden (Zustand = entsichert). Die farblich gekennzeichnete Stelle des Hebels dient zur optischen Positionserkennung.

Zum Entriegeln der Wägezelle werden beide Hebel (2.3.1) um 90° geschwenkt und die Befestigungslasche (12) dreht sich aus der Halteleiste (13) heraus. Diese weist eine exakt gefräste Konturnut (21) für die Aufnahme bzw. Arretierung der Befestigungslasche (12) auf.

Beim Umlegen eines Hebels wird gleichzeitig durch ein Gestänge (15) die gegenüberliegende Seite der Wägezelle entriegelt bzw. verriegelt.
Das Drehgelenk (Lagerbock) (14) gewährleistet hierbei die benötigte, präzise und stabile Führung.

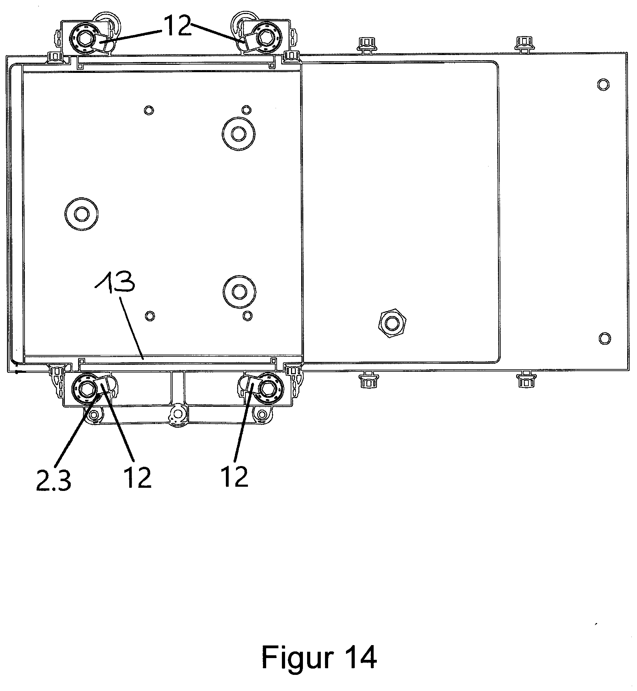

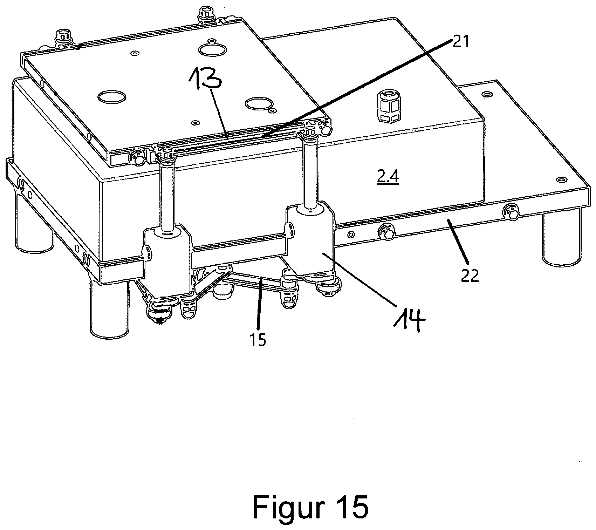

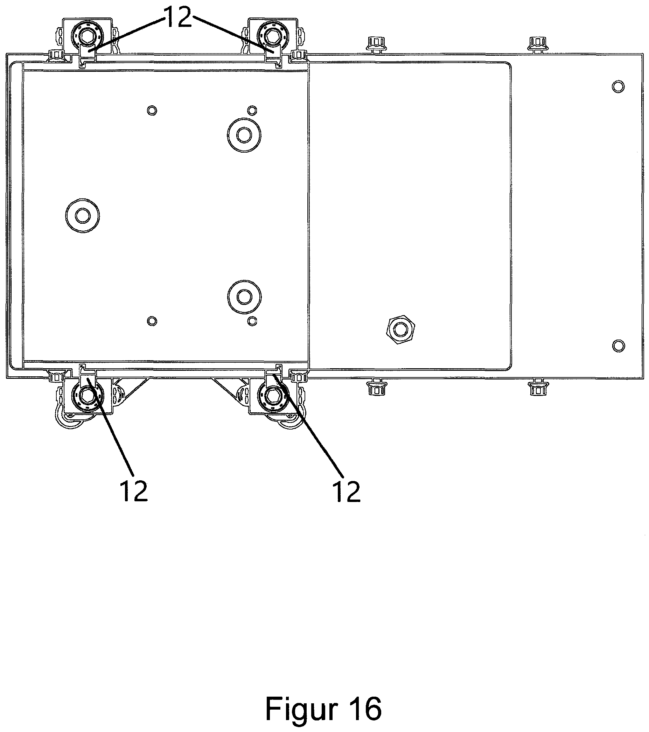

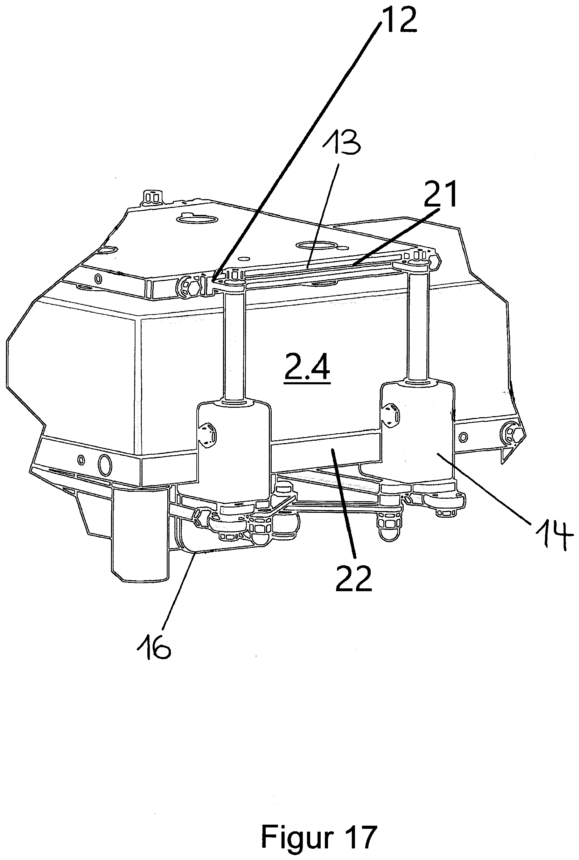

Die elektrische Ausführung der werkzeuglosen Wägezellensicherung ist in den Figuren 14 bis 17 dargestellt.

Bei identischer Aufgabe wie bei der mechanischen Ausführung übernimmt ein elektrischer Antrieb (16) die Funktion der Handhebel.

Die Position der Verriegelung (gesichert/entsichert) kann mittels einem Positionsschalter überwacht werden.

Zusammenfassung der Vorteile (bereits in vorherigen Punkten genannt):
- Industrietaugliche Ausführung
- produktverarbeitendes Geräteteil schnell werkzeuglos zerlegbar
- produktverarbeitendes Geräteteil schnell tauschbar
- produktverarbeitendes Geräteteil modular anpassbar an Schüttgüter und Anbindung an den übergeordneten Prozess: Ein- und Auslauf sowie Entlüftung
- Für viele Schüttgüter einsetzbar
- Für kohäsive Schüttgüter einsetzbar
- Einfache Skalierbarkeit in einem Bereich von 50 g/h und geringer bis mehrere kg/h
- Staubdicht: Toxizität, OEB, Zonenverschleppung
- Hygienic Design
- mehrgängige Schnecken
- werkzeuglose Wägezellensicherung
- zwei unabhängige Schrittmotoren
- auf das Gerät zugeschnittene Wägezelle
- pulsationsarme Dosierung
- eng eingepasstes, ausziehbares Rührwerk
- Dichtungswechselindikator.

### Bezugszeichenliste

- 1: produktverarbeitendes Geräteteil
- 1.1: Trog
- 1.1.1: Vorlage (optional)
- 1.2: Dosierschnecke(n)
- 1.2.2: Doppelwellengetriebe
- 1.2.3: Kupplung Dosierschnecken Abtriebsseite
- 1.3: Rührwerk
- 1.3.2: Lagerung Antriebswelle Rührwerk
- 1.3.3: Kupplung Rührwerk Abtriebsseite
- 1.4: Schnellverbindung(en)
- 1.4.1: Schnellverbindung Stutzen
- 1.4.2: Schnellverbindung Schelle
- 1.5: Schneckenrohr
- 1.6: Flexible Anbindung (optional)
- 1.7: Dichtungswechselindikator

- 2: Wäge- und Antriebstechnik
- 2.1: Maschinenhaube (optional)
- 2.2: Dämpfer
- 2.3: werkzeuglose Wägezellensicherung
- 2.3.1: Hebel
- 2.4: Wägezelle
- 2.5: Motor
- 2.5.1: Kupplung Antriebsseite

- 12: Lasche
- 13: Halteleiste
- 14: Drehgelenk
- 15: Gestänge
- 16: elektrischer Antrieb
- 21: korrespondierende Vertiefung
- 22: ortsfestes Rahmenteil
- A: Prozessrichtung
- B: Einlauf (optional)
- C: Auslauf
- D: Entlüftung (optional)

## Patentansprüche

1. Vorrichtung zum gravimetrischen Dosieren von Schüttgütern, mit mindestens einer Dosierschnecke (1.2) mit einem Antrieb und einem Rührwerk (1.3) mit einem separaten Antrieb (2.5),
wobei die Vorrichtung aus einem produktverarbeitenden Geräteteil und einem Wäge- und Antriebsteil (2) besteht,
wobei beide Teile voneinander trennbar sind,
wobei der Wäge- und Antriebsteil (2) eine Antriebstechnik (2.5, 2.5.1) und eine Wägetechnik umfasst, welche eine Wägezelle (2.4) und ein ortsfestes Gehäuse oder Rahmenteil oder einen ortsfesten Unterbau umfasst,
**dadurch gekennzeichnet,**
**dass** das Rührwerk (1.3) oberhalb der Dosierschnecke (1.2) angeordnet ist,
**dass** sich die Antriebstechnik (2.5, 2.5.1) und der produktverarbeitende Geräteteil (1) auf der Wägezelle (2.4) gegenüber dem ortsfesten Gehäuse oder Rahmenteil oder dem ortsfesten Unterbau abstützen,
**dass** eine Verriegelungseinrichtung (2.3) für die Wägezelle (2.4) vorgesehen ist, wobei im offenen Verriegelungszustand der Verriegelungseinrichtung (2.3) sich die Antriebstechnik (2.5, 2.5.1) auf der Wägezelle (2.4) abstützt und im geschlossenen Verriegelungszustand der Verriegelungseinrichtung (2.3) sich die Antriebstechnik (2.5, 2.5.1) auf dem ortsfesten Gehäuse oder Rahmenteil oder dem ortsfesten Unterbau abstützt und insbesondere statisch mit dem ortsfesten Gehäuse oder Rahmenteil oder dem ortsfesten Unterbau verbunden ist.

2. Vorrichtung zum gravimetrischen Dosieren von Schüttgütern nach Anspruch 1, **dadurch gekennzeichnet,**
**dass** die Verriegelungseinrichtung (2.3) einen Hebel (2.3.1) mit einem Drehgelenk (14) am ortsfesten Gehäuse oder Rahmenteil oder dem ortsfesten Unterbau aufweist und in den offenen oder geschlossenen Verriegelungszustand verschwenkbar ist.

3. Vorrichtung zum gravimetrischen Dosieren von Schüttgütern nach Anspruch 2, **dadurch gekennzeichnet,**
**dass** der Hebel (2.3.1) eine Lasche (12) aufweist, die zum Verriegeln in eine korrespondierende Vertiefung (21) an der Antriebstechnik (2.5, 2.5.1) eingreift.

4. Vorrichtung zum gravimetrischen Dosieren von Schüttgütern nach Anspruch 1, **dadurch gekennzeichnet,**
**dass** die Verriegelungseinrichtung (2.3) an der Antriebstechnik (2.5, 2.5.1) angebracht ist, die mittels der Verriegelungseinrichtung (2.3) mit dem ortsfesten Gehäuse oder Rahmenteil oder dem ortsfesten Unterbau verriegelbar ist.

5. Vorrichtung zum gravimetrischen Dosieren von Schüttgütern nach Anspruch 3, **dadurch gekennzeichnet,**
**dass** die korrespondierende Vertiefung (21) als eine Nut in einer Halteleiste (13) der Antriebstechnik (2.5, 2.5.1) ausgebildet ist.

6. Vorrichtung zum gravimetrischen Dosieren von Schüttgütern nach Anspruch 1, **dadurch gekennzeichnet,**
**dass** der Hebel (2.3.1) werkzeuglos manuell oder motorisch, insbesondere elektrisch, betätigbar ist.

7. Vorrichtung zum gravimetrischen Dosieren von Schüttgütern nach Anspruch 1, **dadurch gekennzeichnet,**
**dass** eine Überwachung des Verriegelungszustands über eine Farbgebung des Hebels (2.3.1) und/oder Positionsschalter vorgesehen ist.

8. Vorrichtung zum gravimetrischen Dosieren von Schüttgütern nach Anspruch 1, **dadurch gekennzeichnet,**
**dass** die Drehzahl des Rührwerks unabhängig von der Drehzahl der, mindestens einen, ggf. mehrgängigen Dosierschnecke (1.2) einstellbar ist.

9. Vorrichtung zum gravimetrischen Dosieren von Schüttgütern nach Anspruch 1, **dadurch gekennzeichnet,**
**dass** die Antriebe von Dosierschnecke (1.2) und Rührwerk (1.3) jeweils einen Schrittmotor oder Servomotor (2.5) umfassen.

10. Vorrichtung zum gravimetrischen Dosieren von Schüttgütern nach Anspruch 1, **dadurch gekennzeichnet,**
**dass** staubdichte Schnellverbindungen eingesetzt werden.

11. Vorrichtung zum gravimetrischen Dosieren von Schüttgütern nach Anspruch 1, **dadurch gekennzeichnet,**
**dass** mehrere, ineinander eingreifende, horizontal nebeneinander angeordnete ein- oder mehrgängige Dosierschnecken (1.2) zur pulsationsarmen Dosierung vorgesehen sind.

12. Vorrichtung zum gravimetrischen Dosieren von Schüttgütern nach Anspruch 1, **dadurch gekennzeichnet,**
**dass** sie ein Hygienic Design aufweist.

13. Vorrichtung zum gravimetrischen Dosieren von Schüttgütern nach Anspruch 1, **dadurch gekennzeichnet,**
**dass** sie werkzeuglos zerlegbar ist.

## Claims

1. Device for the gravimetric metering of bulk materials, comprising at least one metering screw (1.2) comprising a drive, and an agitator (1.3) comprising a separate drive (2.5),
the device consisting of a product-processing equipment part and a weighing and drive part (2),
both parts being separable from one another,
the weighing and drive part (2) comprising a drive system (2.5, 2.5.1) and a weighing system which comprises a load cell (2.4) and a stationary housing or frame part or a stationary substructure,
**characterized in that**
the agitator (1.3) is arranged above the metering screw (1.2), **in that** the drive system (2.5, 2.5.1) and the product-processing equipment part (1) are supported on the load cell (2.4) relative to the stationary housing or frame part or the stationary substructure, and **in that** a locking device (2.3) for the load cell (2.4) is provided, the drive system (2.5, 2.5.1) being supported on the load cell (2.4) in the open locking state of the locking device (2.3) and the drive system (2.5, 2.5.1) being supported on the stationary housing or frame part or the stationary substructure in the closed locking state of the locking device (2.3) and in particular being statically connected to the stationary housing or frame part or the stationary substructure.

2. Device for the gravimetric metering of bulk materials according to claim 1,
**characterized in that**
the locking device (2.3) has a lever (2.3.1) comprising a rotary joint (14) on the stationary housing or frame part or the stationary substructure and can be pivoted into the open or closed locking state.

3. Device for the gravimetric metering of bulk materials according to claim 2,
**characterized in that**
the lever (2.3.1) has a tab (12) which, for locking, engages in a corresponding depression (21) in the drive system (2.5, 2.5.1).

4. Device for the gravimetric metering of bulk materials according to claim 1,
**characterized in that**
the locking device (2.3) is attached to the drive system (2.5, 2.5.1), which can be locked to the stationary housing or frame part or the stationary substructure by means of the locking device (2.3).

5. Device for the gravimetric metering of bulk materials according to claim 3,
**characterized in that**
the corresponding depression (21) is designed as a groove in a retaining bar (13) of the drive system (2.5, 2.5.1).

6. Device for the gravimetric metering of bulk materials according to claim 1,
**characterized in that**
the lever (2.3.1) can be actuated manually or by motor, in particular electrically, without tools.

7. Device for the gravimetric metering of bulk materials according to claim 1,
**characterized in that**
monitoring of the locking state is enabled via a coloring of the lever (2.3.1) and/or position switch.

8. Device for the gravimetric metering of bulk materials according to claim 1,
**characterized in that**
the rotational speed of the agitator is adjustable independently of the rotational speed of the at least one, optionally multi-thread metering screw (1.2).

9. Device for the gravimetric metering of bulk materials according to claim 1,
**characterized in that**
the drives of the metering screw (1.2) and agitator (1.3) each comprise a stepper motor or servomotor (2.5).

10. Device for the gravimetric metering of bulk materials according to claim 1,
**characterized in that**
dust-proof quick-release connections are used.

11. Device for the gravimetric metering of bulk materials according to claim 1,
**characterized in that**
a plurality of single- or multi-thread metering screws (1.2) which engage in one another and are arranged horizontally next to one other, are provided for low pulsation metering.

12. Device for the gravimetric metering of bulk materials according to claim 1,
**characterized in that**
it has a hygienic design.

13. Device for the gravimetric metering of bulk materials according to claim 1,
**characterized in that**
it can be dismantled without tools.

## Revendications

1. Dispositif permettant le dosage gravimétrique de matières en vrac, comportant au moins une vis sans fin de dosage (1.2) comportant un entraînement et un agitateur (1.3) comportant un entraînement (2.5) séparé,
dans lequel le dispositif est constitué d'une partie d'appareil de traitement de produit et d'une partie de pesage et d'entraînement (2),
dans lequel les deux parties peuvent être séparées l'une de l'autre,
dans lequel la partie de pesage et d'entraînement (2) comprend un système d'entraînement (2.5, 2.5.1) et un système de pesage comprenant une cellule de pesage (2.4) et un boîtier ou une partie de cadre fixe ou une base fixe,
**caractérisé en ce**
**que** l'agitateur (1.3) est disposé au-dessus de la vis sans fin de dosage (1.2), **que** le système d'entraînement (2.5, 2.5.1) et la partie d'appareil de traitement de produit (1) s'appuient sur la cellule de pesage (2.4) par rapport au boîtier ou à la partie de cadre fixe ou à la base fixe, **qu'**un appareil de verrouillage (2.3) est prévu pour la cellule de de pesée (2.4), lorsque l'appareil de verrouillage (2.3) est à l'état de verrouillage ouvert, le système d'entraînement (2.5, 2.5.1) s'appuyant sur la cellule de de pesage (2.4) et, lorsque l'appareil de verrouillage (2.3) est à l'état de verrouillage fermé, le système d'entraînement (2.5, 2.5.1) s'appuyant sur le boîtier ou la partie de cadre fixe ou sur la base fixe et étant en particulier relié de manière statique au boîtier ou à la partie de cadre fixe ou à la base fixe.

2. Dispositif permettant le dosage gravimétrique de matières en vrac selon la revendication 1,
**caractérisé en ce**
**que** l'appareil de verrouillage (2.3) présente un levier (2.3.1) comportant une articulation rotative (14) sur le boîtier ou la partie de cadre fixe ou sur la base fixe et peut pivoter à l'état de verrouillage ouvert ou fermé.

3. Dispositif permettant le dosage gravimétrique de matières en vrac selon la revendication 2,
**caractérisé en ce**
**que** le levier (2.3.1) présente une patte (12) qui vient en prise pour le verrouillage dans une cavité (21) correspondante sur le système d'entraînement (2.5, 2.5.1).

4. Dispositif permettant le dosage gravimétrique de matières en vrac selon la revendication 1,
**caractérisé en ce**
**que** l'appareil de verrouillage (2.3) est monté sur le système d'entraînement (2.5, 2.5.1), lequel peut être verrouillé au moyen de l'appareil de verrouillage (2.3) sur le boîtier ou la partie de cadre fixe ou sur la base fixe.

5. Dispositif permettant le dosage gravimétrique de matières en vrac selon la revendication 3,
**caractérisé en ce**
**que** la cavité (21) correspondante est réalisée sous la forme d'une rainure dans une baguette de maintien (13) du système d'entraînement (2.5, 2.5.1).

6. Dispositif permettant le dosage gravimétrique de matières en vrac selon la revendication 1,
**caractérisé en ce**
**que** le levier (2.3.1) peut être actionné sans outil, manuellement ou de manière motorisée, en particulier électriquement.

7. Dispositif permettant le dosage gravimétrique de matières en vrac selon la revendication 1,
**caractérisé en ce**
**qu'**une surveillance de l'état de verrouillage est prévue par l'intermédiaire d'une coloration du levier (2.3.1) et/ou d'un commutateur de position.

8. Dispositif permettant le dosage gravimétrique de matières en vrac selon la revendication 1,
**caractérisé en ce**
**que** la vitesse de rotation de l'agitateur peut être réglée indépendamment de la vitesse de rotation de la vis sans fin de dosage (1.2) à au moins une vitesse, éventuellement à plusieurs vitesses.

9. Dispositif permettant le dosage gravimétrique de matières en vrac selon la revendication 1,
**caractérisé en ce**
**que** les entraînements de la vis sans fin de dosage (1.2) et de l'agitateur (1.3) comprennent respectivement un moteur pas-à-pas ou un servomoteur (2.5).

10. Dispositif permettant le dosage gravimétrique de matières en vrac selon la revendication 1,
**caractérisé en ce**
**que** des raccords rapides étanches à la poussière sont utilisés.

11. Dispositif permettant le dosage gravimétrique de matières en vrac selon la revendication 1,
**caractérisé en ce**
**que** plusieurs vis sans fin de dosage (1.2) à un ou plusieurs filets, disposées côte à côte horizontalement et s'emboîtant les unes dans les autres, sont prévues pour un dosage à faible pulsation.

12. Dispositif permettant le dosage gravimétrique de matières en vrac selon la revendication 1,
**caractérisé en ce**
**qu'**il présente une conception hygiénique.

13. Dispositif permettant le dosage gravimétrique de matières en vrac selon la revendication 1,
**caractérisé en ce**
**qu'**il peut être démonté sans outil.
